# EUROPEAN PATENT APPLICATION

(11) **EP 4 641 334 A1**
(43) Date of publication of application: **29.10.2025**
(21) Application number: 25172681.6
(22) Date of filing: 25.04.2025
(51) Int. Cl.: G05B 23/02, G06Q 10/20

(54) **HYBRID ARTIFICIAL INTELLIGENCE-DRIVEN DECISION SUPPORT SYSTEM AND METHOD FOR REAL-TIME PREDICTIVE INDUSTRIAL PLANT ASSET OPTIMIZATION**

(30) Priority: 26.04.2024 US 202463638977 P
(71) Applicant: AVEVA Software, LLC, Lake Forest, CA 92630 (US)
(72) Inventor: Wankhede, Moresh, Lake Forest, 92630 (US); Chakraborty, Shantanu, Lake Forest, 92630 (US); Bielke, Bill, Lake Forest, 92630 (US); Smith, David, Lake Forest, 92630 (US); Choi, Hing, Lake Forest, 92630 (US); Dhurjati, Mruthyunjaya Kumar, Lake Forest, 92630 (US); Immadi, Chaitanya, Lake Forest, 92630 (US); Morales, Michael, Lake Forest, 92630 (US); Erickson, Brian, Lake Forest, 92630 (US)
(74) Representative: WBH Wachenhausen Patentanwälte PartG mbB

(57) **Abstract**

A hybrid artificial intelligence-driven decision support system, for real-time predictive industrial plant asset optimization, uses real-time sensor data to generate a maintenance schedule for assets based on objectives for an industrial plant. The hybrid artificial intelligence-driven decision support system uses real-time sensor data to predict that the maintenance schedule, which is deployed, will not meet at least one of the objectives. The hybrid artificial intelligence-driven decision support system uses real-time sensor data to generate multiple optimized maintenance schedules for the assets, based on the objectives. A graphical user interface outputs the optimized maintenance schedules for the assets, with explanations how each optimized maintenance schedule would meet the objectives following deployment. The graphical user interface enables a selection and deployment of any one of the optimized maintenance schedules for the assets, thereby changing a scheduled time when an asset maintenance action is performed.

## Description

### CROSS REFERENCE TO RELATED APPLICATION

This application claims priority under 35 U.S.C. § 119 or the Paris Convention from U.S. Provisional Patent Application No. 63/638,977, filed April 26, 2024, the entire contents of which are incorporated herein by reference as if set forth in full herein.

### BACKGROUND

Effective transition to a net-zero future hinges on industrial plant operations and a maintenance team's ability to balance competing objectives such as performance, risk, cost, and sustainability associated with industrial assets. For example, when crude oil must be heated to certain temperature prior to entry into a distillation tower in a petroleum refinery, a furnace is the primary energy input, and a series of heat exchangers which recuperate and then provide some of the furnace's heat are the secondary energy input. However, the crude oil deposits layers of organic and inorganic matter on the heat exchangers, which is referred to as fouling the heat exchangers, and which progressively degrades the performance of the heat exchanges, and thereby necessitates greater costs for increased fuel to heat the furnace and increased furnace emissions.

The fouling problem equations can be complex to calculate due to large numbers of heat exchangers which exhibit nonlinear behavior, and for which the solutions are not obvious, which fits within the general class of problems which have continuous (expected) performance degradation, such as filter fouling, and catalyst deactivation. Traditional approaches to such a problem are manual, laborious, computationally intensive, and include complicated spreadsheets, cleaning studies, forward calculations, and asset management for better energy efficiency and production. Such inefficiencies present challenges for faster response to dynamic industrial plant operations and maintenance situations, especially in specialist resource-constrained environments.

At industrial plants such as a petroleum refinery, operations and maintenance include inefficient maintenance scheduling because conventional maintenance relies on historical data, leading to suboptimal cleaning schedules. High operational costs are based on unoptimized maintenance scheduling, which leads to excessive energy consumption, increased downtime, and resource wastage. An example of increased asset risk is based on fouling accumulation on heat exchangers, which can cause unexpected failures, thereby reducing equipment lifespan and reliability.

### BRIEF DESCRIPTION OF THE DRAWINGS

FIG. 1 illustrates a block diagram of an example predictive asset optimization for a hybrid artificial intelligence-driven decision support system for real-time predictive industrial plant asset optimization, under an embodiment;
FIG. 2 illustrates a block diagram of an example decision twin world within a predictive asset optimization world for a hybrid artificial intelligence-driven decision support system for real-time predictive industrial plant asset optimization, under an embodiment;
FIG. 3 illustrates a block diagram of an example hybrid cloud solution architecture for a hybrid artificial intelligence-driven decision support system for real-time predictive industrial plant asset optimization, under an embodiment;
FIG. 4 illustrates a block diagram of an example use case of heat exchangers optimal maintenance balancing performance, cost, and risk for hybrid artificial intelligence-driven decision support system for real-time predictive industrial plant asset optimization, under an embodiment;
FIG. 5 illustrates a block diagram of an example heat exchanger cleaning scheduling matrix for a hybrid artificial intelligence-driven decision support system for real-time predictive industrial plant asset optimization, under an embodiment;
FIG. 6 illustrates a block diagram of an example predictive asset optimization home page for a hybrid artificial intelligence-driven decision support system for real-time predictive industrial plant asset optimization, under an embodiment;
FIG. 7 illustrates a block diagram of an example predictive asset optimization configuration of a decision twin for a hybrid artificial intelligence-driven decision support system for real-time predictive industrial plant asset optimization, under an embodiment;
FIG. 8 illustrates a block diagram of an example predictive asset optimization decisions options for hybrid artificial intelligence-driven decision support system for real-time predictive industrial plant asset optimization, under an embodiment;
FIG. 9 illustrates a block diagram of an example 360 view of an operating asset through self-serve dashboards for hybrid artificial intelligence-driven decision support system for real-time predictive industrial plant asset optimization, under an embodiment;
FIG. 10 illustrates a block diagram of an example objectives and constraints setup for a digital twin for hybrid artificial intelligence-driven decision support system for real-time predictive industrial plant asset optimization, under an embodiment;
FIG. 11A-B illustrates block diagrams of example decisions on artificial intelligence generated options using effective visualization and an artificial intelligence interface for hybrid artificial intelligence-driven decision support system for real-time predictive industrial plant asset optimization, under an embodiment;
FIG. 12 illustrates a block diagram of an example system for a hybrid artificial intelligence-driven decision support system for real-time predictive industrial plant asset optimization, under an embodiment;
FIG. 13 is a flowchart that illustrates a computer-implemented method for a hybrid artificial intelligence-driven decision support system for real-time predictive industrial plant asset optimization, under an embodiment; and
FIG. 14 is a block diagram illustrating an example hardware device in which the subject matter may be implemented.

### DETAILED DESCRIPTION

This disclosure introduces a hybrid artificial intelligence-driven decision support system that continuously monitors real-time data for industrial plant assets, operational conditions, and performance metrics, and provides up-to-date predictive artificial intelligence models which use historical and real-time data to forecast future trends, and generate the optimal schedules for maintenance actions via an intuitive visualization dashboard. The lack of real-time insights in conventional systems are because traditional models do not provide dynamic, real-time monitoring and forecasting for proactive decision-making. This disclosure's approach revolutionizes plant operations and maintenance, providing a robust, data-driven solution for sustainable and cost-effective operations. With automatic transformation of detailed insights into a list of selectable and explainable actions, this comprehensive approach surpasses existing solutions that often rely solely on siloed historical data or incomplete simulation models lacking the depth and precision achieved by the holistic decision support system. The challenge is to achieve the best possible future maintenance schedule which minimizes the costs of maintenance actions and avoids risk of industrial asset failure.

Embodiments of this disclosure provide a hybrid artificial intelligence-driven decision support system for real-time predictive industrial plant asset optimization. A hybrid artificial intelligence-driven decision support system, for real-time predictive industrial plant asset optimization, uses real-time sensor data to generate a maintenance schedule for assets based on objectives for an industrial plant. The hybrid artificial intelligence-driven decision support system uses real-time sensor data to predict that the maintenance schedule, which is deployed, will not meet at least one of the objectives. The hybrid artificial intelligence-driven decision support system uses real-time sensor data to generate multiple optimized maintenance schedules for the assets, based on the objectives. A graphical user interface outputs the optimized maintenance schedules for the assets, with explanations how each optimized maintenance schedule would meet the objectives following deployment. The graphical user interface enables a selection and deployment of any one of the optimized maintenance schedules for the assets, thereby changing a scheduled time when an asset maintenance action is performed.

For example, a hybrid artificial intelligence-driven decision support system, which can include a predictive maintenance model, a physics-based process simulation model, and a probabilistic risk model for the assets of the industrial plant, generates a maintenance schedule for 9 heat exchangers in a petroleum refinery based on objectives, such as for performance, cost, sustainability, and equipment risks of the petroleum refinery. The hybrid artificial intelligence-driven decision support system uses real-time sensor data to predict that the maintenance schedule, which is deployed, will not meet some of the objectives, which will result in higher costs, increased risks, and/or decreased performance efficiency for the heat exchanger #2 and the heat exchanger #9 over the next 30 days. The hybrid artificial intelligence-driven decision support system generates dozens of optimized maintenance schedules for the 9 heat exchangers, which are predicted to meet all of the objectives when any of these optimized maintenance schedules are deployed. A graphical user interface outputs the 4 most optimized maintenance schedules for the heat exchangers, with explanations how each of the 4 optimized maintenance schedule would meet the objectives after deployment, and comparisons to the current maintenance schedule for the 9 heat exchangers. The graphical user interface enables a refinery operator to select and deploy 1 of the 4 most optimized maintenance schedules for the 9 heat exchangers, which changes the time when the heat exchanger #2 and the heat exchanger #9 are cleaned to earlier cleanings.

Various embodiments and aspects of the disclosures will be described with reference to details discussed below, and the accompanying drawings will illustrate the various embodiments. The following description and drawings are illustrative of the disclosure and are not to be construed as limiting the disclosure. Numerous specific details are described to provide a thorough understanding of various embodiments of the present disclosure. However, in certain instances, well-known or conventional details are not described in order to provide a concise discussion of embodiments of the present disclosure.

Although these embodiments are described in sufficient detail to enable one skilled in the art to practice the disclosed embodiments, it is understood that these examples are not limiting, such that other embodiments may be used, and changes may be made without departing from their spirit and scope. For example, the operations of methods shown and described herein are not necessarily performed in the order indicated and may be performed in parallel. It should also be understood that the methods may include more or fewer operations than are indicated. In some embodiments, operations described herein as separate operations may be combined. Conversely, what may be described herein as a single operation may be implemented in multiple operations.

Reference in the specification to "one embodiment" or "an embodiment" or "some embodiments," means that a particular feature, structure, or characteristic described in conjunction with the embodiment may be included in at least one embodiment of the disclosure. The appearances of the phrase "an embodiment" or "the embodiment" in various places in the specification do not necessarily all refer to the same embodiment.

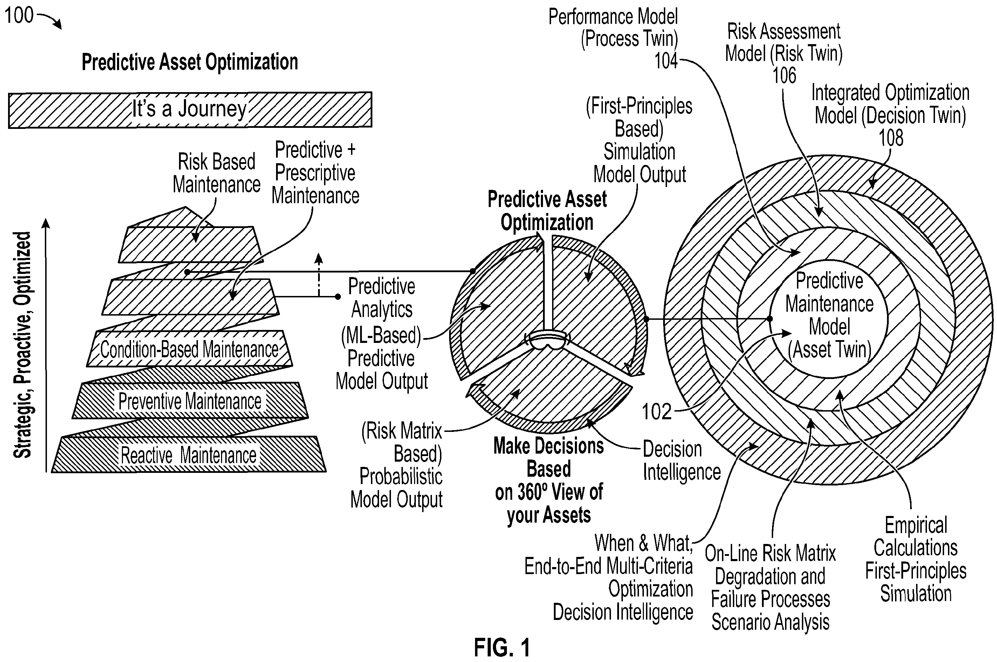

FIG. 1 illustrates a block diagram of an example predictive asset optimization 100 for a hybrid artificial intelligence-driven decision support system for real-time predictive industrial plant asset optimization, under an embodiment. The hybrid artificial intelligence-driven decision support system integrates various digital twins (a virtual replica of a physical object, system, or process) aided with an intuitive and effective visualization dashboard, thus representing a revolutionary approach to industrial plant operations and maintenance practice. At its core, the hybrid artificial intelligence-driven decision support system combines real-time historical data-driven predictive maintenance model (asset twin) **102** with physics-based process simulation model [performance model (process twin) **104],** which is based on empirical (engineering practices) calculations and first principal (physics-based) simulation, and asset probabilistic risk models [risk assessment model risk twin) **106]** to execute in coordination with decision-making twin on-demand [integrated optimization model (decision twin) **108].** With integrated information across all digital twins, the hybrid artificial intelligence-driven decision support system generates optimized schedules of recommended maintenance actions to maximize industrial plant performance, costs, and sustainability objectives, and minimize critical equipment risks, as described in detail below.

Generative scheduling for maintenance automatically generates maintenance schedules optimized for cost, performance, risk, and sustainability, and adjusts plans dynamically as new data becomes available. For example, a maintenance schedule may be currently optimized for assets in an industrial plant, but as seasonal variations change the temperature, pressure, and humidity of the industrial plant's operating conditions, or different fuel mixes are used, the maintenance schedule may no longer be optimal. A multi-objective optimization ensures maintenance decisions balance the competing priorities of performance, cost, risk, and sustainability, and prevents unnecessary maintenance actions while minimizing operational disruptions. By integrating objectives and constraints, the hybrid artificial intelligence-driven decision support system delivers a proactive, data-driven, and explainable approach to industrial plant asset operations and maintenance, leading to improved efficiency, lower costs, reduced risks, and enhanced sustainability.

Benefits achieved for industrial plant operations and maintenance include optimized maintenance timing since artificial intelligence-driven generative scheduling ensures maintenance is performed at the most effective time. Reduced costs and downtime are based on improved scheduling minimizing unnecessary maintenance, thereby reducing operational costs and equipment downtime. Enhanced equipment lifespan is due to proactive maintenance reducing wear and tear, and improving asset longevity.

Improved sustainability is the result of reduced energy consumption and optimized resource use that contributes to lower environmental impact. The increased industrial plant performance efficiency is one result of the hybrid artificial intelligence-driven decision support system maximizing industrial asset performance, ensuring efficient asset operations. These novel elements enable artificial intelligence-driven applications to be more environmentally friendly, efficient, and accessible, addressing major limitations of traditional generative artificial intelligence systems.

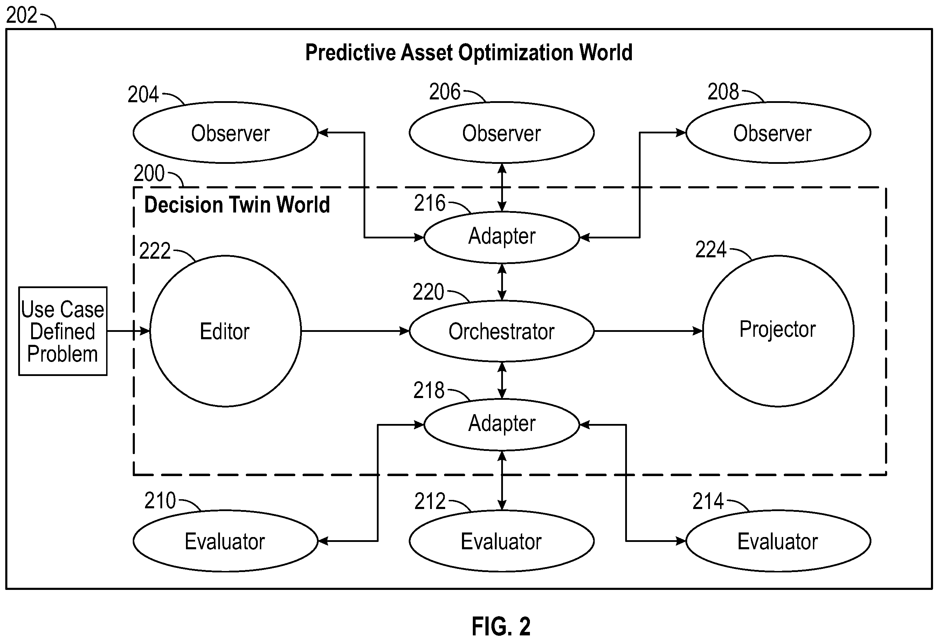

FIG. 2 illustrates a block diagram of an example decision twin world **200** within a predictive asset optimization world **202** for a hybrid artificial intelligence-driven decision support system for real-time predictive industrial plant asset optimization, under an embodiment. Observers **204, 206,** and **208** are systems that capture and relay real-time data. Evaluators **210, 212,** and **214** are systems that analyze historical, real-time, and forward-looking data for decision support.

Adaptor **216** and **218** are communication links between the decision intelligence orchestrator **220,** and other systems, such as the observers **204** - **208** and the evaluators **210** - **214.** An editor **222** is a graphical user interface that specifies decision-making problem to an artificial intelligence engine, such as the orchestrator **220.** A projector **224** is users inferring suggestions' as output from an artificial intelligence engine, such as the orchestrator **220.**

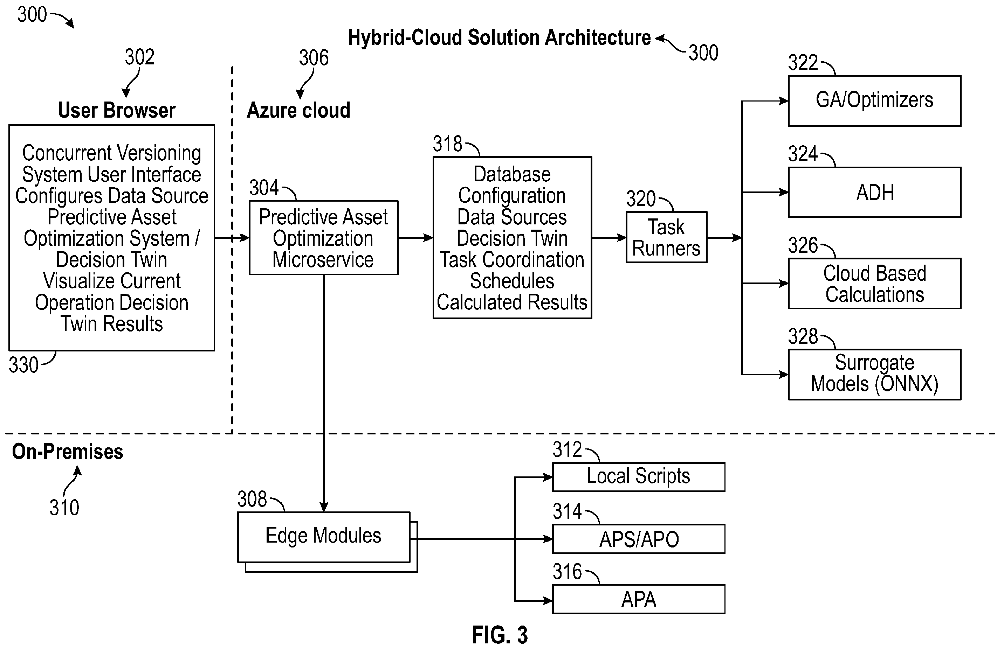

FIG. 3 illustrates a block diagram of an example hybrid cloud solution architecture 300 for a hybrid artificial intelligence-driven decision support system for real-time predictive industrial plant asset optimization, under an embodiment. The hybrid cloud solution architecture **300** includes a user browser **302** that communicates with a predictive asset optimization microservice **304,** which is located in an Azure cloud **306,** and which communicates with edge modules **308,** which are located on premises **310,** and which can access local scripts **312,** APS/APO **314,** and APA **316.** The predictive asset optimization microservice **304** also communicates with a database **318,** which is also located on the azure cloud **306.**

The database **318** also communicates with task runners **320,** which in turn communicate with GA/Optimizers **322,** ADH **324,** cloud-based calculations **326,** and surrogate models (ONNX) **328,** which are all located in the Azure cloud **306.** The user browser **302** incudes a concurrent versioning system graphical user interface **330,** which can configure data sources, predictive asset optimization systems, and decision twins, and visualize current operation decision twin results. The database **318** can store the configurations of data sources and decision twins, and coordinate tasks for schedules and calculated results.

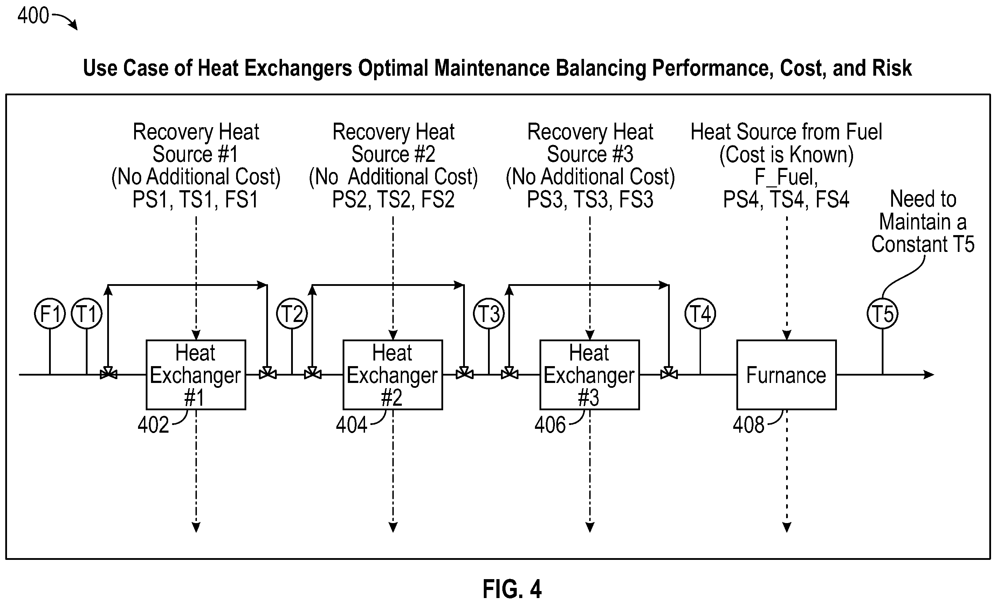

FIG. 4 illustrates a block diagram of an example use case of heat exchangers optimal maintenance balancing performance, cost, and risk **400** for hybrid artificial intelligence-driven decision support system for real-time predictive industrial plant asset optimization, under an embodiment. Although the use case applies to cleaning heat exchangers in a petroleum refinery, the hybrid artificial intelligence-driven decision support system can generate optimized maintenance schedules for other types of industrial assets, such as gas turbines in electricity generating plants and wind turbines in wind farms. The use case results highlight the efficacy of the hybrid artificial intelligence driven decision support system to optimize complex maintenance schedules, which demonstrate notable improvement in performance, cost, risk, and sustainability metrics compared to un-optimized baseline maintenance actions, thereby enhancing industrial plant efficiency while reducing downtime and resource waste. Overall, the use case findings highlight the robust and intuitive experience of this unique hybrid operations and maintenance decision support system in treating large and highly non-linear complex industrial plant operations and maintenance scheduling problems. In the use case example, the decision support system used on-line simulation to measure fouling factor and isolate the extent of performance degradation based on the reconciliation of instrument data.

The use case **400** includes at least heat exchange #1 **402,** heat exchange #2 **404,** and heat exchange #3 **406,** which supplement the heat provided by the furnace **408** to the crude oil which is heated to certain temperature prior to entry into a distillation tower in a petroleum refinery. While no sensor data exists that directly measures the fouling factor for the heat exchanges **402 - 406,** a decision support system can use real-time sensor data monitored from the temperatures, flows, and pressures which are measured entering and leaving the heat exchanges **402 - 406,** and provide this real time data to the physics-based process simulation model. The physic-based process simulation model can use this real-time data to estimate how much of the difference in the temperatures, flows, and pressures which are measured entering and leaving the heat exchanges **402 - 406** are attributable to the fouling caused by oil deposits' layers of organic and inorganic matter on the heat exchangers.

For example, the real-time data sensors measure the pressure PS1, temperature TS1, and flow FS1 entering the heat exchanger #1 **402,** and measure the pressure PS2, temperature TS2, and flow FS2 which have left the heat exchanger #1 **402** and are entering the heat exchanger #2 **404.** Based on what these differences in pressures, temperatures, and flows that the physic-based process simulation model has modeled relative to what these differences should be between these heat exchangers, the physic-based process simulation model can calculate the unexpected differences observed in these metrics, and estimate how much of the unexpected differences is inferred to be due to the fouling of the heat exchangers. Over time, as the estimates of the oil deposit layers accumulate, these modeled estimates can be used as a justification to remove a heat exchanger from service, so that the actual thickness of the accumulated oil deposit layer can be measured and used as feedback to improve the accuracy of the physics-based process simulation model, and the heat exchanger can be cleaned and returned to service.

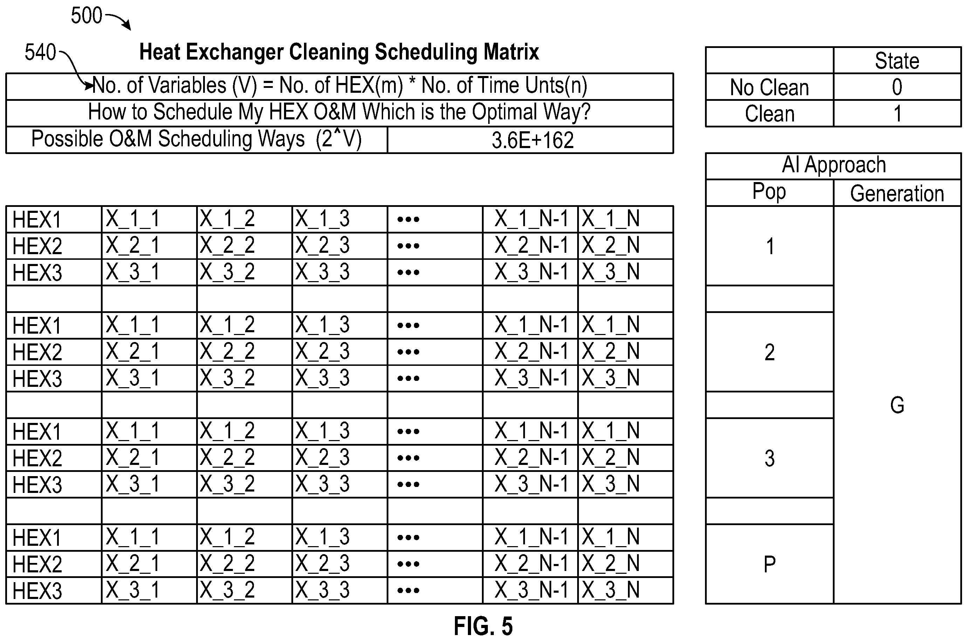

FIG. 5 illustrates a block diagram of an example heat exchanger cleaning scheduling matrix **500** for a hybrid artificial intelligence-driven decision support system for real-time predictive industrial plant asset optimization, under an embodiment. Since the heat exchangers in an industrial plant may be built by different manufacturers using different designs, and may have been in service for different amounts of time, and have different propensities for fouling, each of the heat exchangers may have different optimal lengths of time between cleaning the oil deposit layers. Using a simple example of only 3 heat exchangers which can each be cleaned during any of 180 time units, such as days, the possible number of different combinations of cleaning schedules is 3.6E +162, which is an astronomically large number of combinations which no human being can track, thereby leaving the generation of data-based maintenance schedules for industrial assets to the domain of the hybrid artificial intelligence-based decision support system.

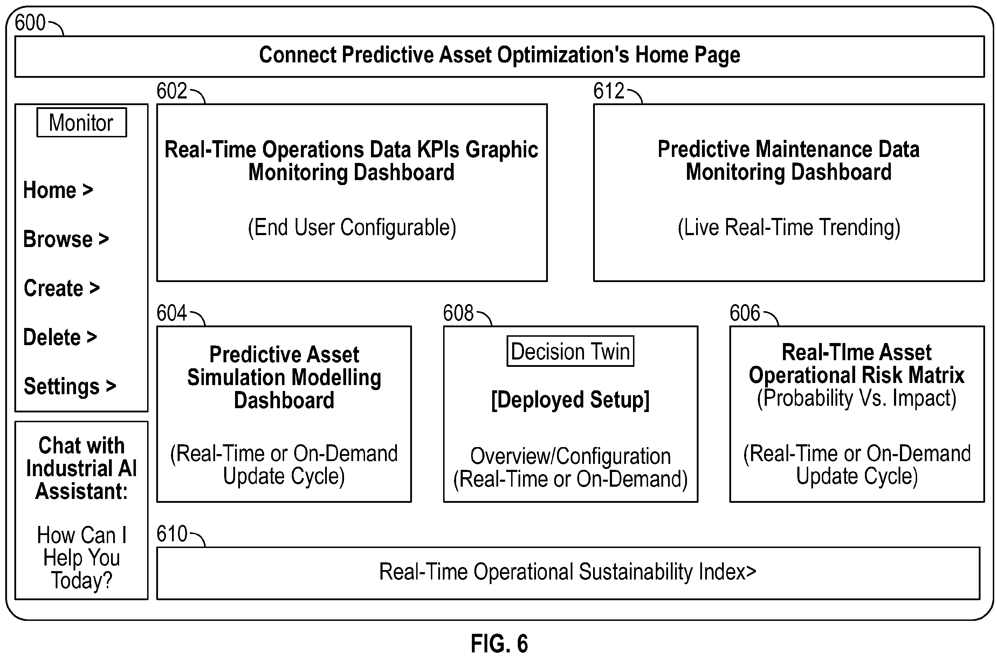

FIG. 6 illustrates a block diagram of an example predictive asset optimization's home page **600** for a hybrid artificial intelligence-driven decision support system for real-time predictive industrial plant asset optimization, under an embodiment. The predictive asset optimization's home page **600** includes real-time operations data key performance indicators graphic monitoring dashboard **602,** a predictive asset simulation modeling **604** dashboard, a real-time asset operational risk **606** matrix (probability vs impact), a decision-making digital twin **608,** a real-time operational sustainability index **610,** and a predictive maintenance data monitoring **612** dashboard. The real-time operations data **602** continuously monitors industrial assets, operational conditions, and performance metrics, and then provides up-to-date insights for predictive modelling and decision-making. Predictive artificial intelligence models use historical and real-time data to forecast future trends, and identify the optimal time for maintenance before performance degrades.

The real-time operations or sensor data **602** and its future forecasted input for generative scheduling of maintenance actions maximizes the likelihood of achieving efficient performance, cost-effective, low risk and sustainable industrial plant operations. Integrated real-time monitoring of operations data **602** and forecasting continuously updates the amounts which each of the objectives are supported and future risk factors to support dynamic decision-making. Physics-based predictive asset simulation modeling **604** simulates industrial asset performance under different operating conditions, and validates artificial intelligence predictions with physics-based accuracy, ensuring reliability. Probabilistic real-time asset operational risk **606** models assess the likelihood and impact of industrial asset failures, which helps quantify maintenance urgency and risk trade-offs.

A decision-making digital twin **608** integrates predictive artificial intelligence, predictive asset simulations modeling **604,** and real-time asset operational risk **606** assessments to generate, compare, and recommend optimized maintenance schedules, and dynamically updates recommendations based on real-time operations data **602** via industrial artificial intelligence assistant chat interface. This system combines the predictive maintenance data monitoring **612** with physics-based predictive asset simulations modeling **604** and real-time asset operational risk **606** to recommend optimized maintenance schedules that balance performance, cost, risk, and sustainability. The predictive asset optimization's home page) **600** showcases a unique concept integrating real-time operations data **602,** physics-based predictive asset simulation modeling **604,** and real-time asset operational risk **606** models to create a holistic 360-degrees asset health assessment which provides a comprehensive view of asset performance, risks, and sustainability factors in a single framework for holistic decision-making.

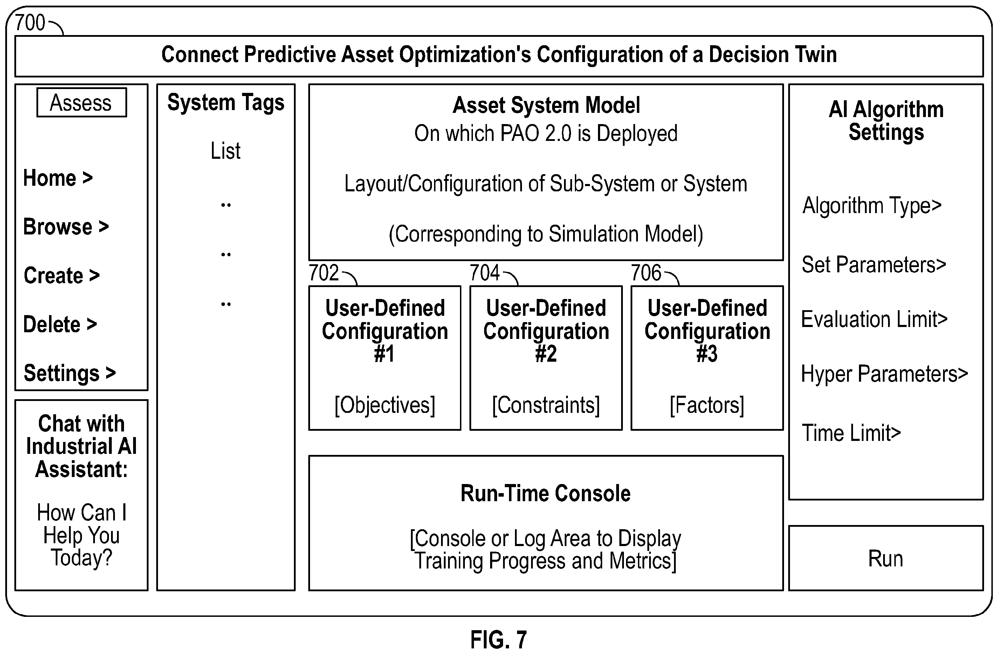

FIG. 7 illustrates a block diagram of an example predictive asset optimization's configuration of a decision twin **700** for a hybrid artificial intelligence-driven decision support system for real-time predictive industrial plant asset optimization, under an embodiment. The configuration of a decision twin **700** includes user-defined configurations of objectives **702,** constraints **704,** and factors **706.** A user can define the configuration of specific objectives **702,** such as the fuel cost, the cleaning cost, and the fuel ratio for the general objective for cost.

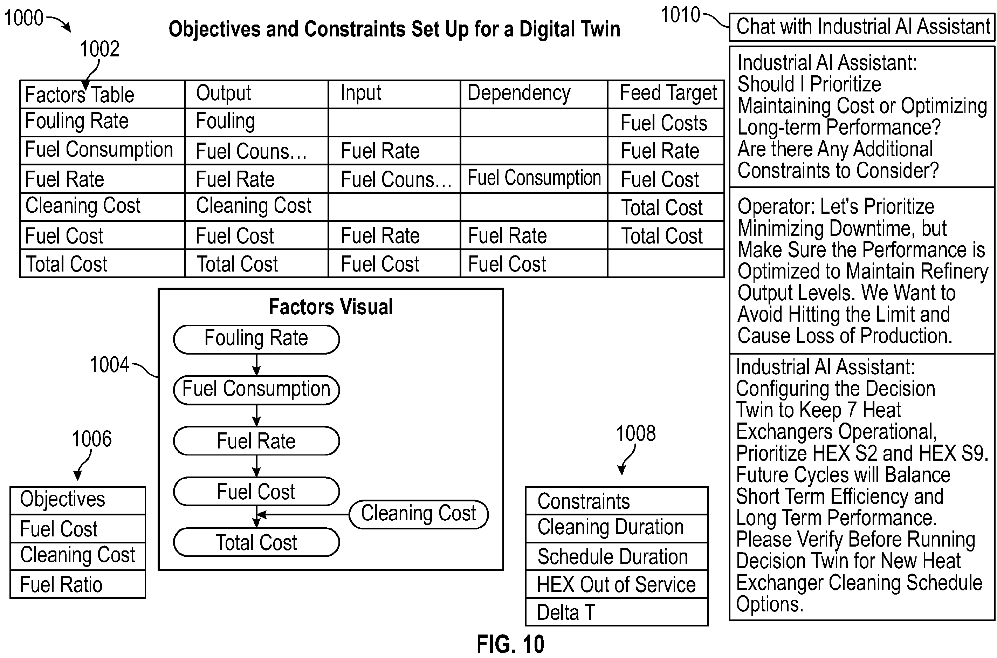

A user can define the configuration of constraints **704** or restrictions that the hybrid artificial intelligence-driven decision support system needs to take into consideration when generating optimized maintenance schedules for industrial assets, such as the cleaning duration for the length of time required to clean a heat exchanger and the heat exchanger out of service, which is a maximum number of heat exchangers which can be permitted to be absent from system operation at any point in time. A user can define the configuration of factors **706** based on each factor's output, input, dependency, and feed target. Factors **706,** objectives **702,** and constraints **704** are described in more detail below in reference to Fig. 10.

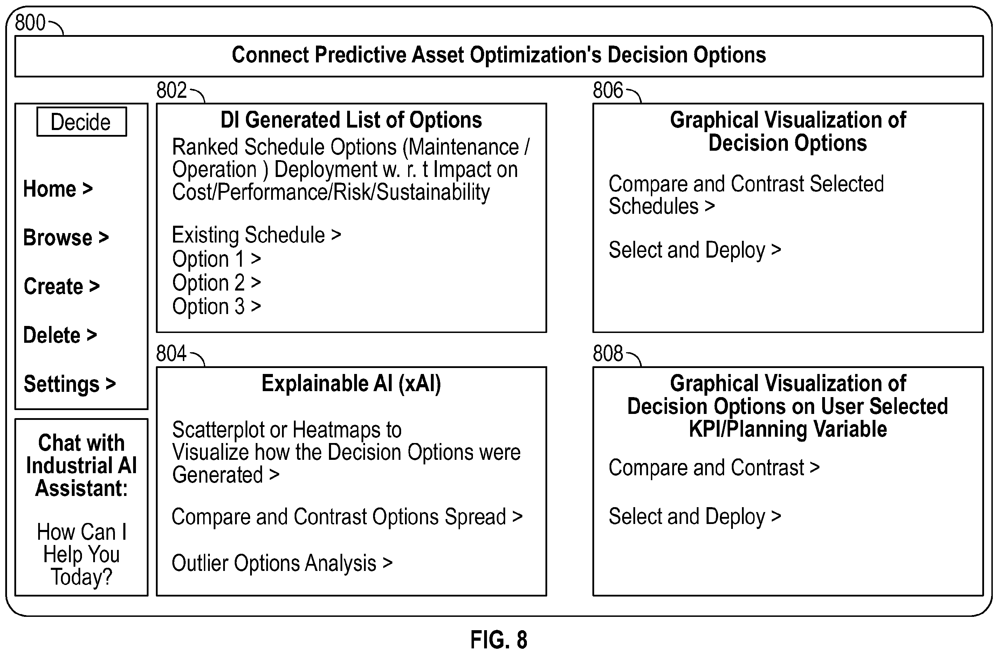

FIG. 8 illustrates a block diagram of an example predictive asset optimization's decisions options **800** for hybrid artificial intelligence-driven decision support system for real-time predictive industrial plant asset optimization, under an embodiment. The predictive asset optimization's decisions options **800** includes a DI generated list of options **802,** an explainable artificial intelligence **804,** a graphical visualization of decision options **806,** and a graphical visualization of decision options on user-selected key performance indicators or planning variables **808.** The decision-making twin enables users to compare the DI list of options **802** while using explainable artificial intelligence **804** support for transparency.

An explainable artificial intelligence **804** interface offers transparent, interpretable decision recommendations to enhance trust and usability for an operations and maintenance team, and provides transparent reasoning behind maintenance recommendations, which enables an operations and maintenance team to validate and trust artificial intelligence-generated schedules, before deploying a selection of a schedule by a user. The intuitive visualization **806** dashboard enhances user interaction by presenting optimized scheduling options and actionable insights options generated by the decision-making twin in an easily interpretable format. The intuitive visualization **808** dashboard displays real-time asset health, predicted trends, and optimized schedules, which enables an operations and maintenance team to compare different maintenance options easily.

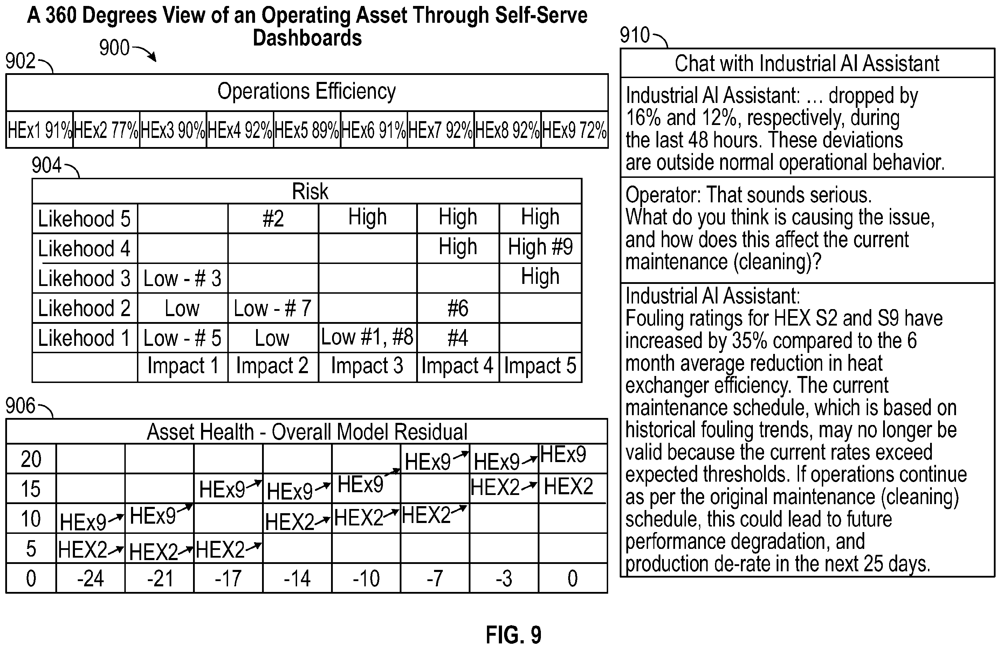

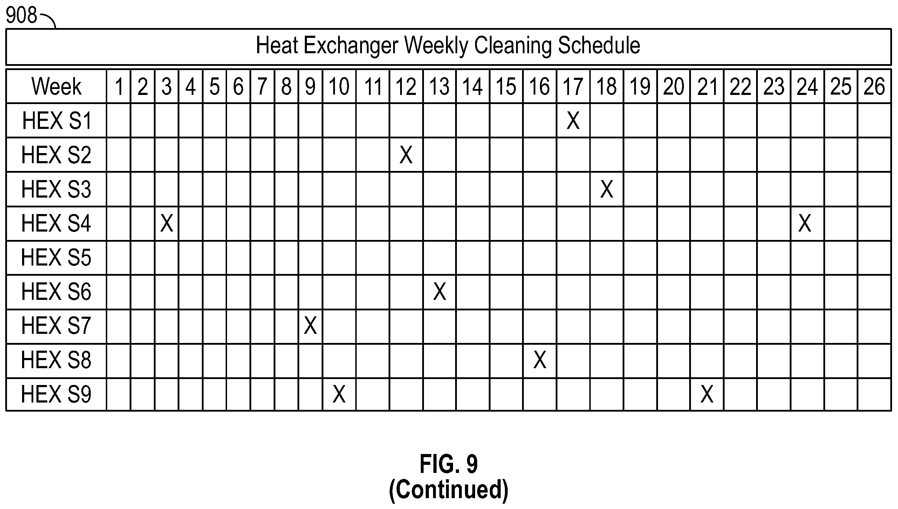

FIG. 9 illustrates a block diagram of an example 360 view of an operating asset through self-serve dashboards **900** for hybrid artificial intelligence-driven decision support system for real-time predictive industrial plant asset optimization, under an embodiment. The self-serve dashboards **900** include an operations efficiency **902** dashboard, a risk **904** dashboard, an asset health-overall model residual **906** dashboard, a heat exchanger weekly cleaning schedule **908** dashboard, and a Chat with Industrial AI Assistant **910** dashboard. The operations efficiency **902** dashboard lists the operating efficiency of each of the heat exchangers, expressed in percentages from 0 to 100. Although Fig. 9 is depicted in black text on a white background, in embodiments the operation efficiencies may be expressed in colors which enable a user to more easily identify operational efficiencies in need of attention, such as depicting efficiencies of the heat exchangers 2 and 9 in red because they are operating at less than 90% efficiency, while depicting the efficiencies of the remaining heat exchangers in green because they are operating at more than 90% efficiencies.

The risk **904** dashboard includes the identification of 5 levels of likelihood (or probability) that the risk of an industrial asset will be realized, combined with 5 levels of impact (or the consequential severity) if the risk of an industrial asset is realized. For example, the risk assessment model (risk twin) predicts that heat exchanger #5 has the lowest level of probability, likelihood 1, of occurring, and the lowest level of severity, impact 1, if this risk is realized, while heat exchanger #9 has the second highest level of probability, likelihood 4 of occurring, and the highest level of severity, impact 5, if this risk is realized. Although Fig. 9 is depicted in black text on a white background, in embodiments the risk likelihoods and impacts may be expressed in colors which enable a user to more easily identify industrial asset risks in need of attention, such as depicting risk combinations of likelihoods and impacts that are identified as high risks in red, depicting risk combinations of likelihoods and impacts that are identified as low risks in green, and depicting all remaining risk combinations of likelihoods and impacts in yellow.

The asset health-overall model residual **906** dashboard depicts a graph of the estimated accumulation of crude oil deposit layers on heat exchangers over time, such as the last 24 hours. For the purposes of graphing clarity, the asset health-overall model residual **906** dashboard depicts a graph of the estimated accumulation of crude oil deposit layers on only the two heat exchangers **#2** and **#9** which have accumulated amounts of deposits which are sufficiently large enough to be individually identified as separate from the graphed data for the other accumulations. However, in some embodiments the heat exchangers that have minimal amounts of accumulation can still be identified.

The heat exchanger weekly cleaning schedule **908** dashboard depicts a matrix which lists a row for each of the heat exchangers in the refinery, and a column for each of the following 26 weeks during which the cleaning of any heat exchanger may be scheduled, such that the cross referencing of rows and columns indicates when a specific heat exchanger is scheduled to be cleaned, such as heat exchanger #1 is scheduled to be cleaned during week 17. The Chat with Industrial AI Assistant **910** dashboard lists the exchange of chat messages between the industrial artificial intelligence assistant and end users of these self-serve dashboards, such as plant operators and maintenance engineers. The artificial intelligence decision support system may use this chat dashboard to alert operators and engineers about conditions in an industrial plant that may require their attention, such as the projected need for maintenance actions.

FIG. 10 illustrates a block diagram of an example objectives and constraints set up for a digital twin **1000** for hybrid artificial intelligence-driven decision support system for real-time predictive industrial plant asset optimization, under an embodiment. The objectives and constraints which set up a digital twin **1000** include a factors table **1002,** a factors visual **1004,** objectives **1006,** constraints **1008,** and the Chat with Industrial AI Assistant **1010** dashboard.

The factors table **1002** includes rows that identify each factor and columns for each factor's output, input, dependency, and feed target. For example, the fuel cost factor outputs a fuel cost, inputs a fuel rate, depends on a fuel rate, and feeds to a total cost, The factors visual **1004** is a visual depiction of the relationship between the factors identified in the factors table **1002,** such as the fuel cost receiving an input from the fuel rate and then providing an output to the total cost, which also receives an output from the cleaning cost. The objectives **1006** is a list of specific objectives, such as the fuel cost, the cleaning cost, and the fuel ratio for the general objective for cost, The constraints **1008** is a list of constraints or restrictions that the hybrid artificial intelligence-driven decision support system needs to take into consideration when generating maintenance schedules for industrial assets, such as the cleaning duration for the length of time required to clean a heat exchanger and the heat exchange out of service, which is a maximum number of heat exchangers which can be permitted to be out of operation at any point in time.

The Chat with Industrial AI Assistant **1010** dashboard lists the exchange of chat messages between the industrial artificial intelligence assistant and end users of these self-serve dashboards, such as plant operators and maintenance engineers. The hybrid artificial intelligence -driven decision support system may use this chat dashboard to discuss objectives such as costs, efficiencies, risks, and sustainability for generating options for new maintenance schedules for industrial assets.

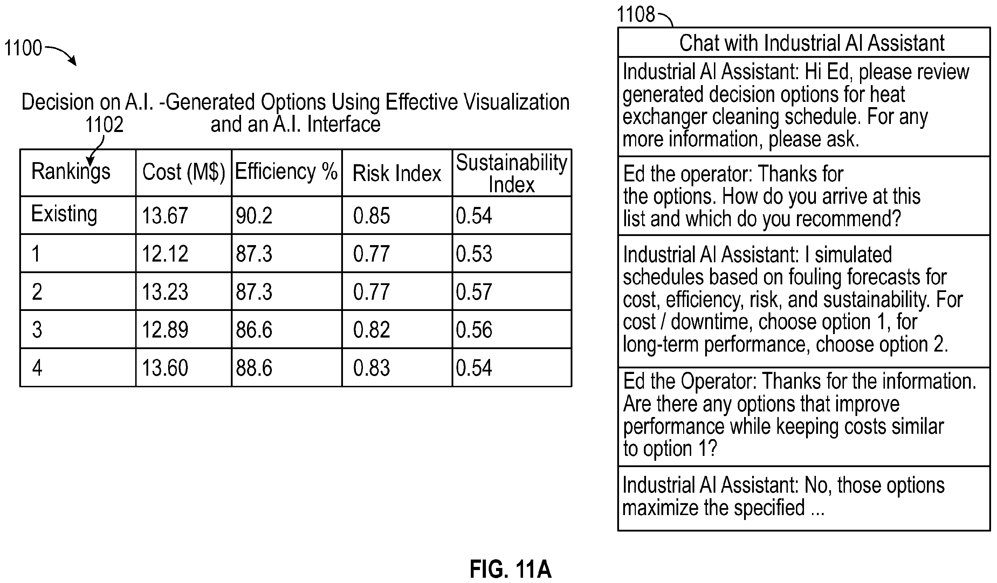

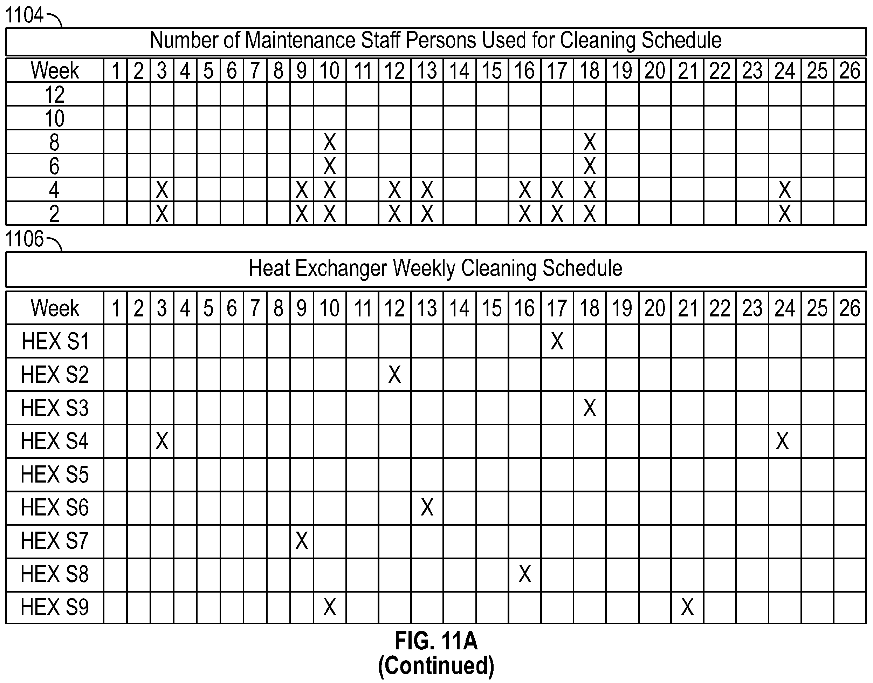

FIG. 11A illustrates a block diagram of example decisions on artificial intelligence-generated options using effective visualization and an artificial intelligence interface **1100** for hybrid artificial intelligence-driven decision support system for real-time predictive industrial plant asset optimization, under an embodiment. The decisions on artificial intelligence generated options using effective visualization and an artificial intelligence interface **1100** includes rankings **1102** of the existing and proposed optimized cleaning schedules, the number of maintenance staff persons used for cleaning schedule **1104,** the heat exchanger weekly cleaning schedule **1106,** and the Chat with Industrial AI Assistant **1108** dashboard.

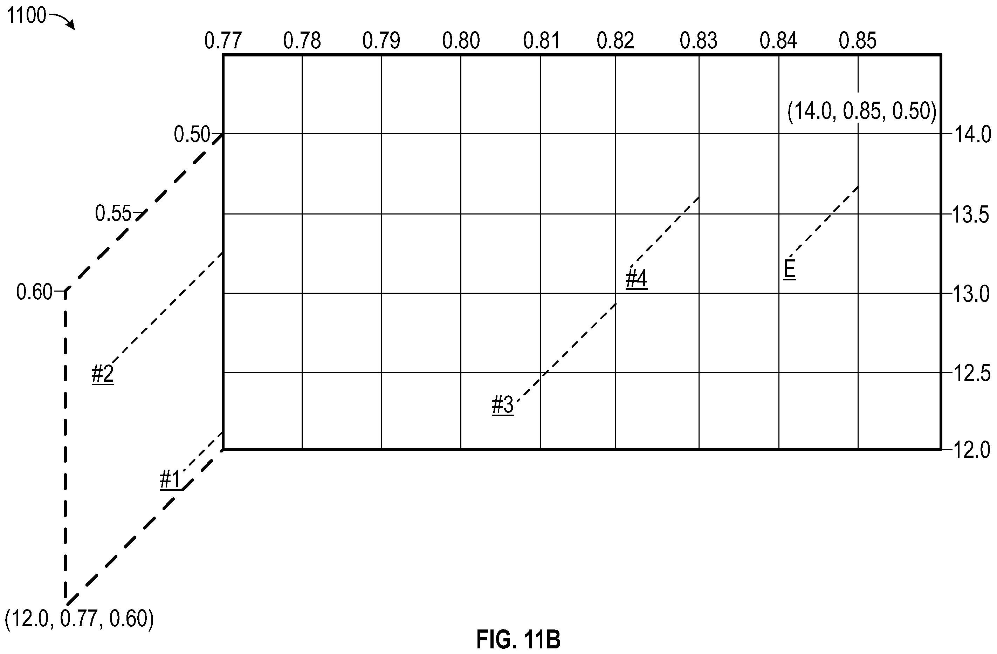

The rankings **1102** of the proposed optimized cleaning schedules provides rows for each of the existing and proposed optimized cleaning schedules for heat exchangers, and columns for each of the schedules' measured objectives, such as specific data values for costs, efficiencies, risks indices, ands sustainability indices. By outputting the rankings **1102** of the existing and proposed optimized cleaning schedules, the graphical user interface enables the comparison of the data values of the objectives for each optimized cleaning schedule to the data values of the objectives for the deployed cleaning schedule. For example, the existing cleaning schedule lists an accumulated total cost of $13.67 million, an efficiency of 90.2%, a risk index of 0.85, and a sustainability index of 0.54, whereas the proposed optimized cleaning schedule #1 over the same time period lists projected values for an accumulated total cost of $12.12 million, an efficiency of 87.3%, a risk index of 0.77, and a sustainability index of 0.53. Comparing the data values of the objectives is discussed in more detail below in reference to Fig. 11B, which depicts a three-dimensional graph of these data values.

After viewing the rankings **1102** of the optimized cleaning schedules, a user may select to deploy an optimized cleaning schedule other than the optimized cleaning schedule that is ranked #1 as more optimal than the other optimized cleaning schedules. For example, a petroleum refinery operator selects to deploy the optimized cleaning schedule **#2** for heat exchangers rather than the optimized cleaning schedule **#1** for heat exchangers, which is the most optimized of the optimized cleaning schedules **#1** - **#4** for heat exchangers. In response to such a selection, the hybrid artificial intelligence-driven decision support system infers that the petroleum refinery operator is using different criteria for selecting the cleaning schedule to be deployed than the criteria that the hybrid artificial intelligence-driven decision support system used to generate the rankings **1102** of the optimized cleaning schedules **#1** - **#4** for heat exchangers.

The hybrid artificial intelligence-driven decision support system can attempt to model human behavior by identifying the differences between the objectives' data values for the optimized cleaning schedule that was selected for deployment by the petroleum refinery operator, and the objectives' data values for the optimized cleaning schedule that was ranked first as the most optimal cleaning schedule, but was bypassed instead of selected for deployment by the petroleum refinery operator. By assigning a weight of the objectives data value which is more optimized in the optimized cleaning schedule that was selected by a petroleum refinery operator, the hybrid artificial intelligence-driven decision support system models a human's behavior by assigning more importance to a more optimized data value that the human might be using as the basis for selecting a cleaning schedule. Conversely, by assigning a different weight to an objective data value which is more optimized for the optimized cleaning schedule that was bypassed instead of selected for deployment by the petroleum refinery operator, the hybrid artificial intelligence-driven decision support system models a human's behavior by assigning less importance to an optimized data value that the humans might be de-emphasizing as the basis for bypassing selection of a cleaning schedule. For example, since the optimized cleaning schedule #1 ranked as the most optimal of the optimized cleaning schedules **#1** - **#4** lists the cost objective value of $12.12 million, which is the most optimized or lowest of all the cost objective values for all of the optimized cleaning schedules **#1** - **#4,** this lowest cost could have been the basis for a petroleum refinery operator to select the optimal cleaning schedule **#1** for deployment. However, since the petroleum refinery operator bypassed selecting the most optimal cleaning schedule #1 that lists the lowest cost objective value for deployment, the hybrid artificial intelligence-driven decision support system infers that the petroleum refinery operator may have assigned a lower weight to the cost objective value when deciding to select an optimized cleaning schedule than the hybrid artificial intelligence-driven decision support system had assigned when generating the rankings **1102** of the optimized cleaning schedules **#1** - **#4.**

In another example, since the optimized cleaning schedule **#2** lists the sustainability index value of 0.57, which is the most optimized or highest of all the sustainability index values for all of the optimized cleaning schedules **#1** - **#4,** this highest sustainability index could be the basis for a petroleum refinery operator to bypass selection of the optimized cleaning schedule **#1** and select the optimized cleaning schedule **#2** for deployment. Since the hybrid artificial intelligence-driven decision support system ranked the optimized cleaning schedule **#2** as less optimal than the optimized cleaning schedule **#1,** which is ranked as the most optimal of the optimized cleaning schedules **1** - **#4,** this infers that the petroleum refinery operator may have assigned a higher weight to the sustainability index value when deciding to select the optimized cleaning schedule **#2** than the hybrid artificial intelligence-driven decision support system had assigned when generating the rankings **1102** of the optimized cleaning schedules **1** - **#4.** Continuing the example, the optimized cleaning schedule **#*2*** lists only one objective data value, the sustainability index value of 0.57, that is more optimized than the corresponding objective data value, the sustainability index value of 0.53, for the optimized cleaning schedule **#1.** Further to the example, the optimized cleaning schedule **#1** lists only one objective data value, the cost value of $12.12 million, that is more optimized than the corresponding objective data value, the cost value of $13.23, for the optimized cleaning schedule **#2.** Both of the optimized cleaning schedule **#1** and the optimized cleaning schedule **#2** have more optimized costs and more optimized sustainability indices than the existing cleaning schedule, and relative to each other, the cost value of $12.12 million for the optimized cleaning schedule **#1** is 8.4% less than, or more optimized than, the cost value of $13.23 million for the optimized cleaning schedule **#2,** while the sustainability index of 0.57 for the optimized cleaning schedule **#2** is 7.5% more than, or more optimized than, the sustainability index of 0.53 for the optimized cleaning schedule **#1.**

If both the cost value and the sustainability index are weighed equally when ranking the optimized cleaning schedules **1** - **#4,** the hybrid artificial intelligence-driven decision support system will rank the optimized cleaning schedule **#1** as the most optimized cleaning schedule since its numerical advantage of 8.4% for the cost objective's value is greater than the numerical advantage of 7.5% for the sustainability index's value is for the optimized cleaning schedule **#2.** However, the selection of the optimized cleaning schedule **#2** indicates that the petroleum refinery operator is using different criteria for selecting cleaning schedules for deployment than the hybrid artificial intelligence-driven decision support system is using for ranking the optimized cleaning schedules **1** - **#4.** Since the numerical advantage of 8.4% for the cost objective's value is for the optimized cleaning schedule **#1,** and is 0.9% greater than the numerical advantage of 7.5% for the sustainability index's value is for the optimized cleaning schedule **#2,** the hybrid artificial intelligence-driven decision support system may learn to anticipate the plant operator's unexpected selection of an optimized cleaning schedule that is not the most optimal by increasing the weight of the sustainability index's value by approximately 1.0% from 1.00 to 1.01, thereby increasing the weighted numerical advantage of the sustainability index data value to surpass the numerical advantage of the cost value. Alternatively, the hybrid artificial intelligence-driven decision support system may decrease the weight of the cost objective's value by approximately 1.0% from 1.00 to 0.99, thereby decreasing the weighted numerical advantage of the cost value to thereby become less than the numerical advantage of the sustainability index. In yet another possibility, a 0.5% increase in the weight of the sustainability index combined with a 0.5% decrease in the weight of the cost value could result in the rankings **1102** listing the optimized cleaning schedule **#2** as more optimal than the optimized cleaning schedule **#1,** thereby emulating the selection behavior by the petroleum refinery operator for the next opportunity to select between optimized cleaning schedules.

Although the preceding examples describe the comparison of objectives' data values by simply dividing one data value by another data value to generate a relative percentage, comparisons of data values may be based on relationships to maximum values, minimum values, ranges of values, or any other suitable mathematical procedure. Likewise, while the preceding examples describe comparing data values for only two of the objectives for the purpose of simplifying explanations, the data values may be compared for all four of the objectives, or even more than four objectives if additional objectives are configured. Similarly, the preceding examples describe comparing data values for only two of the optimized cleaning schedules for the purpose of simplifying explanations, but the data values may be compared for more than two of the optimized cleaning schedules. Furthermore, even though the preceding examples describe the weights for objectives being created or changed in response to optimized cleaning schedules being selected for deployment or bypassed for selection for deployment, weights for objectives may be created or changed during database configurations or any other suitable procedures, and therefore be pre-existing weights for rankings of optimized cleaning schedules.

The number of maintenance staff persons used for cleaning schedule **1104** dashboard depicts a matrix which lists a row for the number of people who are currently assigned to cleaning a heat exchangers in the refinery, and a column for each of the following 26 weeks during which the cleaning of any heat exchanger has been scheduled, such that the cross referencing of rows and columns indicates how many people are scheduled to cleaning a specific heat exchanger that will be cleaned, such as 8 people are assigned to cleaning a heat exchanger during the week 10. The heat exchanger weekly cleaning schedule **1106** dashboard depicts a matrix which lists a row for each of the heat exchangers in the refinery, and a column for each of the following 26 weeks during which the cleaning of any heat exchanger may be scheduled, such that the cross referencing of rows and columns indicates when a specific heat exchanger is scheduled to be cleaned, such as the heat exchanger #1 is scheduled to be cleaned during week 17. The schedules **1104** and **1106** may not match if the plant operator reschedules when the heat exchangers should be cleaned without coordinating the rescheduling with the maintenance engineer who schedules the maintenance staff persons who clean the heat exchangers.

Consequently, the hybrid artificial intelligence-driven decision support system may need to determine whether a mismatch exists between the schedule **1104** of the maintenance staff persons scheduled to be cleaning a heat exchanger and the schedule **1106** of when heat exchangers need to be cleaned, and possibly reconcile the two schedules **1104** and **1106.** The Chat with Industrial AI Assistant **1108** dashboard lists the exchange of chat messages between the industrial artificial intelligence assistant and end users of these self-serve dashboards, such as plant operators and maintenance engineers. The hybrid artificial intelligence-driven decision support system may use this chat dashboard to answer questions from plant operator and maintenance engineers about the costs, efficiencies, risks, and sustainability of the options for the new maintenance schedule for industrial assets.

FIG. 11B illustrates a block diagram of an example three dimensional graph of cost, efficiency, and sustainability **1110** for a hybrid artificial intelligence-driven decision support system for real-time predictive industrial plant asset optimization, under an embodiment. By outputting the rankings **1102** of the existing cleaning schedule and the proposed optimized cleaning schedules, the graphical user interface enables the easy comparison of the cost in millions of dollars for any of the proposed optimized cleaning schedules to the currently deployed cleaning schedule. For example, the existing cleaning schedule lists an estimated accumulated total cost of $13.67 million, whereas the proposed optimized cleaning schedule #1 over the same time period lists a projected accumulated total cost of $12.12 million. While comparing the data values of a single objective, such as cost, for only two cleaning schedules may be relatively easy, comparing the data values for multiple objectives for larger numbers of cleaning schedules may be more challenging for a user to evaluate.

Fig. 11B depicts a three-dimensional graph **1110** of these data values, which assists users in comparing large numbers of objectives' data values for large numbers of cleaning schedules. For example, since the data values for the risk index range from 0.77 to 0.85, the horizontal X axis depicts data values from a minimum of 0.77 to a maximum Of 0.85. In another example, since the data values for the cost objective range from $12.12 million to $13.67 million the vertical Y axis depicts data values from a minimum of $12.0 million to a maximum of $14.0 million. In yet another example, since the data values for the sustainability index range from 0.53 to 0.57, the diagonal Z axis depicts data values from a minimum of 0.50 to a maximum Of 0.60. In an additional example, since the data values for the efficiency objective range from 86.6% to 90.2%, the additional W axis in the fourth dimension could depict data values from a minimum of 85% to a maximum of 91%, but in the interests of clarity of depictions, Fig. 11B is limited to depicting only three dimensions.

Since the most optimal risk index depicted in this three dimensional graph **1110** is the lowest risk index of 0.77, the most optimal cost depicted in this three dimensional graph **1110** is the lowest cost of $12.0 million, and the most optimal sustainability index depicted in this three dimensional graph **1110** is the highest sustain ability index of 0.60, then the most optimal combination of data values would correspond to the coordinates (0.77, 12.0, 0.60), which is the data point located at the bottom left corner of the graph. The closer that the combinations of data values for a cleaning schedule is graphed to this collectively most optimal point, the more optimal the cleaning schedule is collectively. Since the least optimal risk index depicted in this three dimensional graph **1110** is the highest risk of 0.85, the least optimal cost depicted in this three dimensional graph **1110** is the highest cost of $14.05 million, and the least optimal sustainability index depicted in this three dimensional graph **1110** is the lowest sustainability index of 0.50, then the least optimal combination of data values would correspond to the coordinates (0.85, 14.0, 0.50), which is the data point located at the upper right corner of the graph. The closer the combinations of data values for a cleaning schedule is graphed to this collectively least optimal data point, the less optimal the cleaning schedule is collectively. Consequently, a user viewing the three-dimensional graph **1110** depicted in Fig. 11B can easily identify that the existing (E) cleaning schedule is more expensive and has higher risks than each of the proposed cleaning schedules, and that both of the proposed cleaning schedules (#1) and (#2) are depicted as graphed very close to the most optimal cleaning schedule.

Having reviewed the components of the hybrid artificial intelligence-driven decision support system and their functioning, a narrative may assist in understating an example of their practical. Observers and evaluators are being installed in a petroleum refinery which has a manually generated cleaning schedule for its heat exchangers, a decision twin is being configured and deployed to the observers and evaluators via adapters, and the data flow architecture for an end-to-end automated graphical user interface is being configured until it is working. In the operations and maintenance control room at the start of a shift, an operator named Su and a maintenance engineer named Ed access the digital twin landing page interface, which includes an asset status dashboard, and notice that everything is running smoothly with few alarms or alerts.

Su and Ed check the petroleum refinery's historical data and notice suboptimal performance. Su, Ed, and an analyst named Om decide to take action by requesting a decision twin to generate a new heat exchanger cleaning schedule to meet their objectives for the petroleum refinery. Om opens the decision twin's optimizer dashboard, a user-friendly interface that allows them to configure the maintenance schedule quickly.

Om begins by selecting the relevant TAG IDs from the database, which contains information about all of the petroleum refinery's assets. Next, they define the objectives, constraints, and directives functions for the optimizer to consider with respect to TAG ID's or creating user new-defined ID's. They input relevant contextual information in the graphical user interface during the configuration. The digital twin optimizer then transforms their input into a mathematical search and optimization problem, and uses advanced operations and maintenance algorithms to explore the solution space and find the optimal solution options.

The digital twin optimizer presents Om with multiple scheduling options that can improve the petroleum refinery's performance, reduce costs, minimize risk, and improve sustainability, and displays the quantified 'impact' of each option. Om reviews the scheduling options presented by the digital twin optimizer with Su and Ed and compares these scheduling options to the existing schedule for identifying the most suitable scheduling changes to make. The operations and maintenance staff discusses the scheduling options with other stakeholders. They decide to implement the scheduling option Y, which offers the most significant overall benefits at that point in time T1. Ed updates the heat exchanger cleaning schedule and communicates the changes to the relevant operations and maintenance teams.

Later at given time T2, the digital twin discovers a heat exchanger event which invalidates the in-place cleaning schedule for heat exchangers because one or more of objectives is violated or needs improvement. The digital twin has the option to recommend stopping normal operations of the heat exchanger and cleaning the heat exchanger immediately or waiting until the regularly planned shutdown of the heat exchanger for cleaning the heat exchanger. If the heat exchanger is cleaned immediately, the risk of the heat exchanger failing is eliminated, and the petroleum refinery returns to standard operations quicker. If the recommendation is for waiting until the regularly planned shutdown of the heat exchanger, and the heat exchanger does not fail while waiting for the regularly planned shutdown, then the cost of the response to the heat exchanger event is optimized by being minimized.

However, waiting for the regularly planned shutdown risks equipment failure during standard operations. If the digital twin changes the cleaning schedule to schedule the cleaning of the heat exchanger earlier than was originally scheduled, without scheduling an immediate cleaning, this rescheduling could reduce the risk of the heat exchanger failing, which costs less than an immediate cleaning. Therefore, the digital twin generates a new 'optimal' maintenance schedule which may be deployed. After the digital twin discovers at time T2 that the current heat exchanger cleaning schedule is not going to meet all of the planned targets or objectives, likely leading to higher costs, increased risk, and decreased efficiency over the next N days, the digital twin uses advanced operations and maintenance algorithms to explore the solution space and identify the optimal solution options, generate multiple scheduling options for new heat exchanger cleaning schedules to meet the scheduling objectives, and displays a message on the digital twin landing page interface which is accessed by Su and Ed. The digital twin optimizer presents Om with multiple options that can improve the plant's performance, reduce costs, minimize risk, and improve the sustainability index with quantified 'impact' of each option.

Om reviews the options presented by the digital twin optimizer with Su and Ed and compares these scheduling options to the existing schedule to identify the most suitable change to make in the scheduled maintenance. The operations and maintenance staff discusses the scheduling options with other stakeholders, and decide to implement the scheduling option Z, which offers the most significant overall benefits at that point in time T2. Ed updates the heat exchanger cleaning schedule and communicates the changes to the relevant operations and maintenance teams. Then the digital twin monitors the newly revised optimized maintenance schedule performance to ensure that the new schedule is working and when best to execute the next schedule re-generation process, such as time-based, key performance indicator-based, event-based, etc.

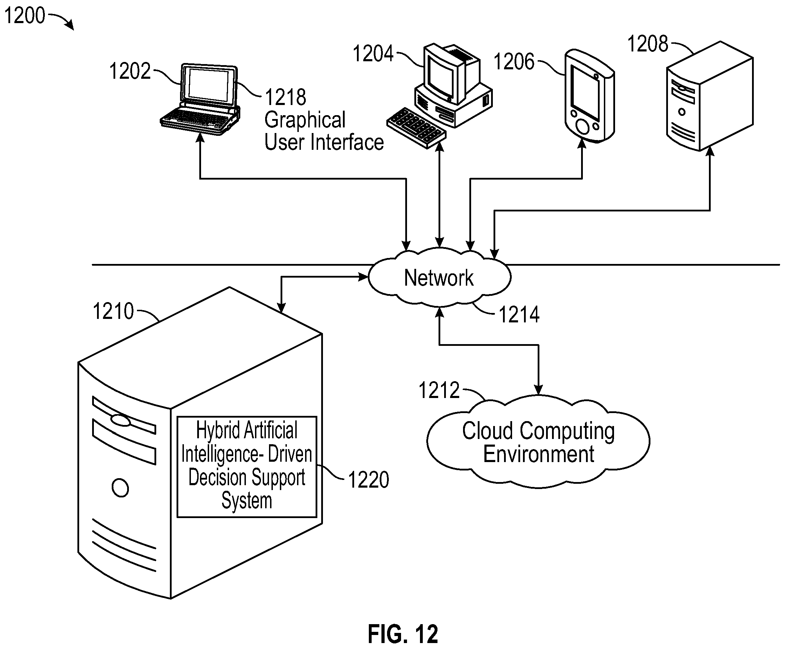

FIG. **12** illustrates a block diagram of an example system **1200** for a hybrid artificial intelligence and simulation-based multi-objective decision support system to optimize the maintenance of industrial plant assets, under an embodiment. As shown in FIG. 12, the system **1200** may illustrate a cloud computing environment in which data, applications, services, and other resources are stored and delivered through shared data centers and appear as a single point of access for the users. The system **1200** may also represent any other type of distributed computer network environment in which servers control the storage and distribution of resources and services for different client users.

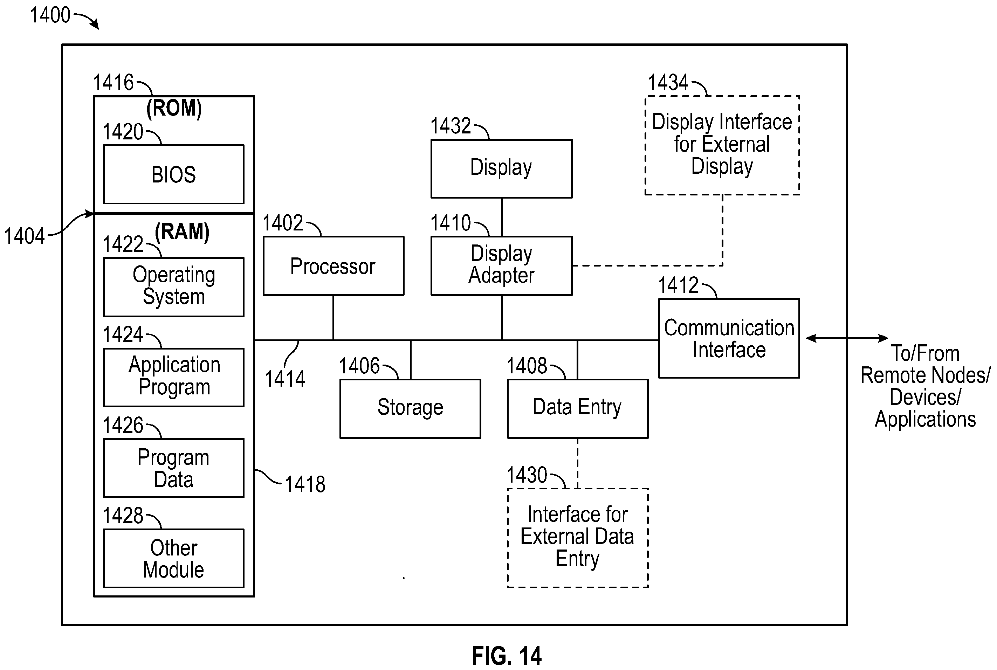

In an embodiment, the system **1200** represents a cloud computing system that includes a first client **1202,** a second client **1204,** a third client **1206,** a fourth client **1208,** and a server **1210** and an optional cloud computing environment **1212** that may be provided by a hosting company. The clients **1202 - 1208,** the server **1210,** and the cloud computing environment **1212** communicate via a network **1214.** Even though FIG. **12** depicts the first client **1202** as a laptop computer **1202,** the second client **1204** as a desktop computer **1204,** the third client **1206** as a smart phone **1206,** and the fourth client **1208** as a server, each of the system components **1202** - **1210** may be any type of computer system, and may each be substantially similar to the hardware device **1400** depicted in FIG. **14** and described below.

The server **1210** can host and execute a hybrid artificial intelligence-driven decision support system **1220** that generates maintenance schedules for industrial assets, which may be accessed via a graphical user interface **1218,** as depicted by Fig. **12****,** and/or reside on any of the clients **1202** - **1208.** Although FIG. **12** depicts all of the hybrid artificial intelligence-driven decision support system **1220** residing completely on the server **1210,** any or all of the hybrid artificial intelligence-driven decision support system **1220** may reside completely on the clients **1202** - **1208,** completely on the cloud computing environment **1212,** or in any combination of partially on the clients **1202** - **1208,** partially the server **1210,** partially on the cloud computing environment **1212** and/or partially on another server which is not depicted in FIG. **12.** FIG. **12** depicts the system **1200** with four clients **1202** - **1208,** one server **1210,** one cloud computing environment **1212,** one network **1214,** one hybrid artificial intelligence-driven decision support system **1220,** and one graphical user interface **1218,** but the system **1200** may include any number of clients **1202** - **1208,** any number of servers **1210,** any number of cloud computing environment **1212,** any number of network **1214,** any number of the hybrid artificial intelligence-driven decision support system **1220,** and any number of graphical user interface **1218.**

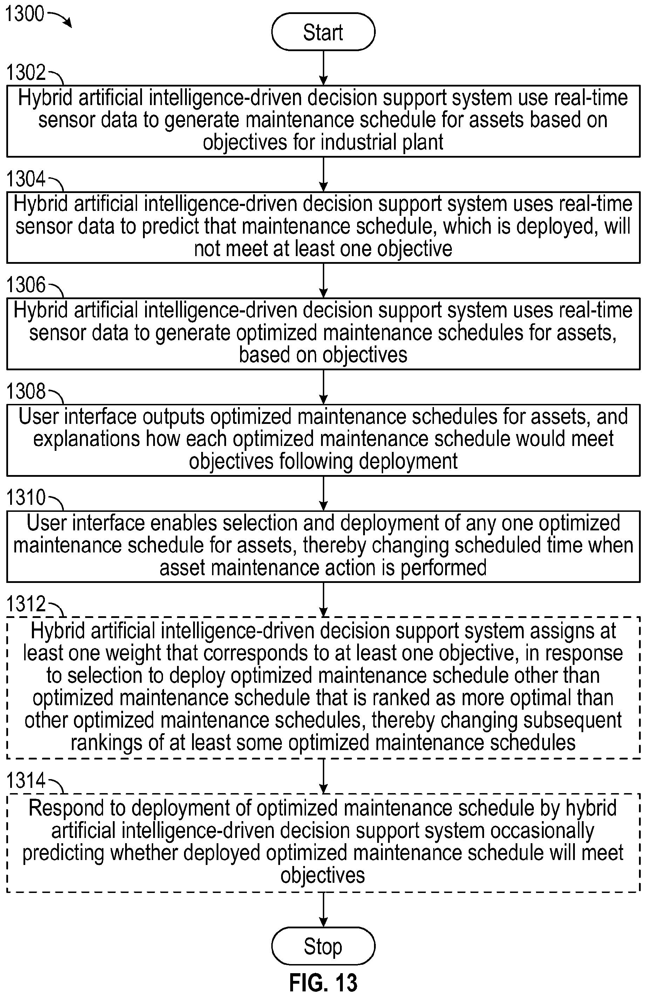

FIG. **13** is a flowchart that illustrates a computer-implemented method for a hybrid artificial intelligence and simulation-based multi-objective decision support system to optimize the maintenance of industrial plant assets, under an embodiment. Flowchart **1300** depicts method acts illustrated as flowchart blocks for certain actions involved in and/or between the system elements **1202 - 1220** of FIG. **12****.**

A hybrid artificial intelligence-driven decision support system uses real-time sensor data to generate a maintenance schedule for assets based on objectives for an industrial plant, block **1302.** An artificial intelligence system generates a maintenance schedule for assets in an industrial plant. For example, and without limitation, this can include the hybrid artificial intelligence-driven decision support system **1220,** which can include at least one of a predictive maintenance model, a physics-based process simulation model, or a probabilistic risk model for the assets of the industrial plant, generating a cleaning schedule for 9 heat exchangers in a petroleum refinery based on objectives, which can be defined for performance, cost, sustainability, and equipment risks of the petroleum refinery.

A hybrid artificial intelligence-driven decision support system can be a combination of different machine learning types which use statistical models to help managers by organizing, collecting, and analyzing business data to support better management and planning. Real-time sensor data can be the continuous flow of information, generated by measurement devices, delivered for immediate processing and analysis, thereby enabling quick reactions to changing conditions. A maintenance schedule can be a plan that details the specific tasks, timelines, and resources needed to maintain equipment or facilities, ensuring optimal performance and preventing breakdowns.

An asset can be a resource with economic value that a company owns or controls with the expectation that the resource will provide a future benefit. An objective can be a goal, intention, or purpose. An industrial plant can be a factory or similar place where manufacturing and/or distribution takes place. A predictive maintenance model can be a system that uses data analysis and algorithms to estimate when equipment is likely to fail, thereby enabling proactive support while minimizing downtime and costs. A physics-based process simulation model can be a technique that uses fundamental science laws and equations to imitate and predict the behavior of a system, offering insights into its dynamics and performance.

A probabilistic risk model can be a systematic methodology that evaluates and quantifies the likelihood and severity of potential outcomes, while considering all possible scenarios and their associated uncertainties. A performance can be the action or process of carrying out or accomplishing an action, task, or function. A cost can be the estimated price for an objective or result toward which efforts are directed. A sustainability can be the ability to be maintained at a rate for an objective or result toward which efforts are directed. An equipment risk can be the likelihood and severity of harm, injury, or damage resulting from the use or malfunction of an industrial machine, encompassing both mechanical and other hazards.

After generating a maintenance schedule for assets, a hybrid artificial intelligence-driven decision support system uses real-time sensor data to predict that the maintenance schedule, which is deployed, will not meet at least one of the objectives, block **1304.** The artificial intelligence system predicts that a maintenance schedule for assets will fail to meet at least one of its objectives. By way of example and without limitation, this can include the hybrid artificial intelligence-driven decision support system **1220** using real-time sensor data to predict that the heat exchanger cleaning schedule, which is deployed, will not meet some of the objectives, which will result in higher costs, increased risks, and/or decreased performance efficiency for the heat exchanger #2 and the heat exchanger #9 over the next 30 days.

Following the predicting that a maintenance schedule will fail to meet at least one objective, a hybrid artificial intelligence-driven decision support system uses real-time sensor data to generate multiple optimized maintenance schedules for the assets, based on the objectives, block **1306.** The artificial intelligence system generates an optimized maintenance schedule to replace the failed or failing maintenance schedule. In embodiments, this can include the hybrid artificial intelligence-driven decision support system **1220** generating optimized cleaning schedules for the 9 heat exchangers, whereby each optimized heat exchanger cleaning schedule is predicted to meet all of the objectives upon deployment. A graphical user interface can be the computer display by which a human and a computer system interact, in particular the input devices and software that interact with the human. An optimized maintenance schedule can be a plan that is improved or made more effective, efficient, and functional than before, and which details the specific tasks, timelines, and resources needed to maintain equipment or facilities, ensuring optimal performance and preventing breakdowns.

Having generated optimized maintenance schedules, a graphical user interface outputs the optimized maintenance schedules for the assets, with explanations how each optimized maintenance schedule would meet the objectives following deployment, block 1308. The system outputs optimized maintenance schedules which can replace the maintenance schedule that failed or is failing to meet an objective. For example, and without limitation, this can include the graphical user interface **1218** outputting the optimized cleaning schedules for the 9 heat exchangers, with explanations how each optimized cleaning schedule would meet the objectives following deployment. An explanation can be a statement, report, or account that clarifies some point(s).

After outputting optimized maintenance schedules, a graphical user interface enables a selection and deployment of any one of the optimized maintenance schedules for the assets, thereby changing a scheduled time when an asset maintenance action is performed, block **1310.** The system replaces a maintenance schedule that failed or is failing to meet an objective with an optimized maintenance schedule. By way of example and without limitation, this can include a graphical user interface **1218** enabling a refinery operator to select and deploy an optimized cleaning schedules for the 9 heat exchangers, which changes the scheduled time when the heat exchanger #2 and the heat exchanger #9 are cleaned.

A selection can be the action or fact of carefully choosing something as being the best or most suitable. A deployment can be the action of bringing resources into effective action. A scheduled time can be at an arranged chronological period. An asset maintenance action can be the inspecting, servicing, and repairing of equipment to ensure the equipment remains functional and reliable throughout its lifespan, ultimately aiming to extend its longevity and minimize downtime.

The output, via the graphical user interface, may include comparisons of each optimized maintenance schedule to the deployed maintenance schedule. For example, the existing maintenance schedule has an accumulated total cost of $13.12 million, whereas the proposed optimized maintenance schedule #1 over the same time period would be projected to have an accumulated total cost of $12.93 million. A comparison can be a consideration or estimate of the similarities or dissimilarities between two things. A deployed maintenance schedule can be the action of bringing a plan into effective action which details the specific tasks, timelines, and resources needed to maintain equipment or facilities, ensuring optimal performance and preventing breakdowns.

The comparisons of each optimized maintenance schedule to the deployed maintenance schedule may be based on depicting data values corresponding to at least three objectives for each maintenance schedule on a graph comprising at least three dimensions corresponding to the at least three objectives. For example, Fig. 11B depicts a three-dimensional graph **1110** that enables the petroleum refinery operator to easily identify that the existing **(E)** maintenance schedule is more expensive than the proposed optimized maintenance schedule **(#4),** is less sustainable than proposed optimized maintenance schedule **(#3),** and is both more expensive and less efficient than the proposed optimized maintenance schedules **(#1)** and (#2). A data value can be a specific piece of information or content that may occupy a particular field or cell within a record. A graph can be a diagram showing the relation between variable quantities, typically of two variables, each measured along one of a pair of axes at right angles. A dimension can be a measurable extent of some kind, such as length, breadth, depth, or height.

Following selection and deployment of an optimized maintenance schedule, the hybrid artificial intelligence-driven decision support system optionally assigns at least one weight that corresponds to at least one of the objectives, in response to a selection to deploy an optimized maintenance schedule other than an optimized maintenance schedule that is ranked as more optimal than the other optimized maintenance schedules, thereby changing subsequent rankings of at least some of the optimized maintenance schedules, block **1312.** The artificial intelligence system adjusts the relative weights of the objectives used for ranking optimized maintenance schedules to emulate the human weights implied by the current selection of a maintenance schedule by a human. In embodiments, this can include the the hybrid artificial intelligence-driven decision support system increasing the weight of the sustainability objective value from 1.00 to 1.005 and decreasing the weight of the cost objective value from 1.00 to 0.995% which results in the reordering of the optimized maintenance schedule **#2** as the most optimal maintenance schedule and the optimized maintenance schedule **#1** as the next most optimized schedule. These weights enable emulating the petroleum refinery operator's bypassing of the selection of the optimized maintenance schedule **#1,** which was the highest ranked as the most optimized maintenance schedule, to select the optimized maintenance schedule #2, which was the second highest ranked optimized maintenance schedule, for deployment.

A weight can be the relative importance attached to something. A selection can be carefully choose as being the best or most suitable. Ranked can be a relative standing or position. More optimal can be something that is better or more favorable than the current situation, approaching the best or most effective possible outcome. A subsequent ranking can be a relative standing or position which occurs after something in time.

Following deployment of an optimized maintenance schedule, the hybrid artificial intelligence-driven decision support system responds to deployment of the optimized maintenance schedule by occasionally predicting whether the deployed optimized maintenance schedule will meet the objectives, block **1314.** The artificial intelligence systems continues verifying whether new optimizations are required of the deployed maintenance schedule. For example, and without limitation, this can include the hybrid artificial intelligence-driven decision support system **1220,** which predicted that the deployed optimized maintenance schedules for the 9 heat exchangers would meet all of the objectives, continues to be predicted to meet all of the objectives.

Although FIG. **13** depicts the blocks **1302 - 1314** occurring in a specific order, the blocks **1302 - 1314** can occur in another order. In other implementations, each of the blocks **1302 - 1314** can also be executed in combination with other blocks and/or some blocks may be divided into a different set of blocks.

An exemplary hardware device in which the subject matter may be implemented shall be described. Those of ordinary skill in the art will appreciate that the elements illustrated in FIG. **14** can vary depending on the system implementation. With reference to FIG. **14****,** an exemplary system for implementing the subject matter disclosed herein includes a hardware device **1400,** including a processing unit **1402,** a memory **1404,** a storage **1406,** a data entry module **1408,** a display adapter **1410,** a communication interface **1412,** and a bus **1414** that couples elements **1404 - 1412** to the processing unit **1402.**

The bus **1414** can comprise any type of bus architecture. Examples include a memory bus, a peripheral bus, a local bus, etc. The processing unit **1402** is an instruction execution machine, apparatus, or device and can comprise a microprocessor, a digital signal processor, a graphics processing unit, an application specific integrated circuit (ASIC), a field programmable gate array (FPGA), etc. The processing unit **1402** may be configured to execute program instructions stored in the memory **1404** and/or the storage **1406** and/or received via the data entry module **1408.**

The memory **1404** can include a read only memory (ROM) **1416** and a random-access memory (RAM) **1418.** The memory **1404** may be configured to store program instructions and data during operation of the hardware device **1400.** In various embodiments, the memory **1404** can include any of a variety of memory technologies such as static random-access memory (SRAM) or dynamic RAM (DRAM), including variants such as dual data rate synchronous DRAM (DDR SDRAM), error correcting code synchronous DRAM (ECC SDRAM), or RAMBUS DRAM (RDRAM), for example.

The memory **1404** can also include nonvolatile memory technologies such as nonvolatile flash RAM (NVRAM) or ROM. In some embodiments, it is contemplated that the memory **1404** can include a combination of technologies such as the foregoing, as well as other technologies not specifically mentioned. When the subject matter is implemented in a computer system, a basic input/output system (BIOS) **1420,** containing the basic routines that help to transfer information between elements within the computer system, such as during start-up, is stored in the ROM **1416.**

The storage **1406** can include a flash memory data storage device for reading from and writing to flash memory, a hard disk drive for reading from and writing to a hard disk, a magnetic disk drive for reading from or writing to a removable magnetic disk, and/or an optical disk drive for reading from or writing to a removable optical disk such as a CD ROM, DVD or other optical media. The drives and their associated computer-readable media provide nonvolatile storage of computer readable instructions, data structures, program modules and other data for the hardware device **1400.**

It is noted that the methods described herein may be embodied in executable instructions stored in a computer readable medium for use by or in connection with an instruction execution machine, apparatus, or device, such as a computer-based or processor-containing machine, apparatus, or device. It will be appreciated by those skilled in the art that for some embodiments, other types of computer readable media may be used which can store data that is accessible by a computer, such as magnetic cassettes, flash memory cards, digital video disks, Bernoulli cartridges, RAM, ROM, and the like can also be used in the exemplary operating environment. As used here, a "computer-readable medium" can include one or more of any suitable media for storing the executable instructions of a computer program in one or more of an electronic, magnetic, optical, and electromagnetic format, such that the instruction execution machine, system, apparatus, or device can read (or fetch) the instructions from the computer readable medium and execute the instructions for carrying out the described methods. A non-exhaustive list of conventional exemplary computer readable medium includes: a portable computer diskette; a RAM; a ROM; an erasable programmable read only memory (EPROM or flash memory); optical storage devices, including a portable compact disc (CD), a portable digital video disc (DVD), a high-definition DVD (HD-DVD^{™}), a BLU-RAY disc; and the like.

A number of program modules may be stored on the storage **1406,** the ROM **1416** or the RAM **1418,** including an operating system **1422,** one or more applications programs **1426,** program data **1426,** and other program modules **1428.** A user can enter commands and information into the hardware device **1400** through data entry module **1408.** The data entry module **1408** can include mechanisms such as a keyboard, a touch screen, a pointing device, etc.

Other external input devices (not shown) are connected to the hardware device **1400** via an external data entry interface **1410.** By way of example and not limitation, external input devices can include a microphone, joystick, game pad, satellite dish, scanner, or the like. In some embodiments, external input devices can include video or audio input devices such as a video camera, a still camera, etc. The data entry module **1408** may be configured to receive input from one or more users of the hardware device **1400** and to deliver such input to the processing unit **1402** and/or the memory **1404** via the bus **1414.**

A display **1412** is also connected to the bus **1414** via the display adapter **1410.** The display **1412** may be configured to display output of the hardware device **1400** to one or more users. In some embodiments, a given device such as a touch screen, for example, can function as both the data entry module **1408** and the display **1412.** External display devices can also be connected to the bus **1414** via the external display interface **1434.** Other peripheral output devices, not shown, such as speakers and printers, may be connected to the hardware device **1400.**

The hardware device **1400** can operate in a networked environment using logical connections to one or more remote nodes (not shown) via the communication interface **1412.** The remote node may be another computer, a server, a router, a peer device or other common network node, and typically includes many or all of the elements described above relative to the hardware device **1400.** The communication interface **1412** can interface with a wireless network and/or a wired network. Examples of wireless networks include, for example, a BLUETOOTH network, a wireless personal area network, a wireless 802. 21 local area network (LAN), and/or wireless telephony network (e.g., a cellular, PCS, or GSM network).

Examples of wired networks include, for example, a LAN, a fiber optic network, a wired personal area network, a telephony network, and/or a wide area network (WAN). Such networking environments are commonplace in intranets, the Internet, offices, enterpri se-wide computer networks and the like. In some embodiments, the communication interface **1412** can include logic configured to support direct memory access (DMA) transfers between the memory **1404** and other devices.

In a networked environment, program modules depicted relative to the hardware device **1400,** or portions thereof, may be stored in a remote storage device, such as, for example, on a server. It will be appreciated that other hardware and/or software to establish a communications link between the hardware device **1400** and other devices may be used.

It should be understood that the arrangement of the hardware device **1400** illustrated in FIG. **14** is but one potential implementation and that other arrangements are feasible. It should also be understood that the various system components (and means) defined by the claims, described below, and illustrated in the various block diagrams represent logical components that are configured to perform the functionality described herein. For example, one or more of these system components (and means) may be realized, in whole or in part, by at least some of the components illustrated in the arrangement of the hardware device **1400.**

In addition, while at least one of these components are implemented at least partially as an electronic hardware component, and therefore constitutes a machine, the other components may be implemented in software, hardware, or a combination of software and hardware. More particularly, at least one component defined by the claims is implemented at least partially as an electronic hardware component, such as an instruction execution machine (e.g., a processor-based or processor-containing machine) and/or as specialized circuits or circuitry (e.g., discrete logic gates interconnected to perform a specialized function), such as those illustrated in FIG. **14****.**

Other components may be implemented in software, hardware, or a combination of software and hardware. Moreover, some or all of these other components may be combined, some may be omitted altogether, and additional components may be added while still achieving the functionality described herein. Thus, the subject matter described herein may be embodied in many different variations, and all such variations are contemplated to be within the scope of what is claimed.

In the descriptions above, the subject matter is described with reference to acts and symbolic representations of operations that are performed by one or more devices, unless indicated otherwise. As such, it is understood that such acts and operations, which are at times referred to as being computer-executed, include the manipulation by the processing unit of data in a structured form. This manipulation transforms the data or maintains it at locations in the memory system of the computer, which reconfigures or otherwise alters the operation of the device in a manner well understood by those skilled in the art. The data structures where data is maintained are physical locations of the memory that have particular properties defined by the format of the data. However, while the subject matter is described in a context, it is not meant to be limiting as those of skill in the art will appreciate that various of the acts and operations described hereinafter can also be implemented in hardware.

To facilitate an understanding of the subject matter described above, many aspects are described in terms of sequences of actions. At least one of these aspects defined by the claims is performed by an electronic hardware component. For example, it will be recognized that the various actions may be performed by specialized circuits or circuitry, by program instructions being executed by one or more processors, or by a combination of both. The description herein of any sequence of actions is not intended to imply that the specific order described for performing that sequence must be followed. All methods described herein may be performed in any suitable order unless otherwise indicated herein or otherwise clearly contradicted by context.

While one or more implementations have been described by way of example and in terms of the specific embodiments, it is to be understood that one or more implementations are not limited to the disclosed embodiments. To the contrary, it is intended to cover various modifications and similar arrangements as would be apparent to those skilled in the art. Therefore, the scope of the appended claims should be accorded the broadest interpretation so as to encompass all such modifications and similar arrangements.

## Claims

1. A system for a hybrid artificial intelligence-driven decision support system for real-time predictive industrial plant asset optimization, the system comprising:
one or more processors; and a non-transitory computer readable medium storing a plurality of instructions, which
when executed, cause the one or more processors to:
generate, by a hybrid artificial intelligence-driven decision support system using real-time sensor data, a maintenance schedule for assets based on objectives for an industrial plant;
predict, by the hybrid artificial intelligence-driven decision support system using real-time sensor data, that the maintenance schedule, which is deployed, will not meet at least one of the objectives;
generate, by the hybrid artificial intelligence-driven decision support system using real-time sensor data, optimized maintenance schedules for the assets, based on the objectives;
output, via a graphical user interface, the optimized maintenance schedules for the assets, with explanations how each optimized maintenance schedule would meet the objectives following deployment; and
enable, by the graphical user interface, a selection and deployment of any one of the optimized maintenance schedules for the assets, thereby changing a scheduled time when an asset maintenance action is performed.

2. The system of claim 1, wherein the hybrid artificial intelligence-driven decision support system comprises at least one of a predictive maintenance model, a physics-based process simulation model, or a probabilistic risk model for the assets of the industrial plant.

3. The system of claim 1, wherein the objectives comprise a combination of a performance, a cost, a sustainability, or an equipment risk for an industrial plant.

4. The system of claim 1, wherein the output, via the graphical user interface, further comprises comparisons of each optimized maintenance schedule to the deployed maintenance schedule.

5. The system of claim 4, wherein the comparisons of each optimized maintenance schedule to the deployed maintenance schedule are based on depicting data values corresponding to at least three objectives for each maintenance schedule on a graph comprising at least three dimensions corresponding to the at least three objectives.

6. The system of claim 1, wherein the plurality of instructions further causes the processor to assign, by the hybrid artificial intelligence-driven decision support system, at least one weight that corresponds to at least one of the objectives, in response to a selection to deploy an optimized maintenance schedule other than an optimized maintenance schedule that is ranked as more optimal than the other optimized maintenance schedules, thereby changing subsequent rankings of at least some of the optimized maintenance schedules.

7. The system of claim 1, wherein the plurality of instructions further causes the processor to respond to deployment of the optimized maintenance schedule by the hybrid artificial intelligence-driven decision support system occasionally predicting whether the deployed optimized maintenance schedule will meet the objectives.

8. A computer-implemented method for a hybrid artificial intelligence-driven decision support system for real-time predictive industrial plant asset optimization, the computer-implemented method comprising:
generating, by a hybrid artificial intelligence-driven decision support system using real-time sensor data, a maintenance schedule for assets based on objectives for an industrial plant;
predicting, by the hybrid artificial intelligence-driven decision support system using real-time sensor data, that the maintenance schedule, which is deployed, will not meet at least one of the objectives;
generating, by the hybrid artificial intelligence-driven decision support system using real-time sensor data, optimized maintenance schedules for the assets, based on the objectives;
outputting, via a graphical user interface, the optimized maintenance schedules for the assets, with explanations how each optimized maintenance schedule would meet the objectives following deployment; and
enabling, by the graphical user interface, a selection and deployment of any one of the optimized maintenance schedules for the assets, thereby changing a scheduled time when an asset maintenance action is performed.

9. The computer-implemented method of claim 8, wherein the hybrid artificial intelligence-driven decision support system comprises at least one of a predictive maintenance model, a physics-based process simulation model, or a probabilistic risk model for the assets of the industrial plant.

10. The computer-implemented method of claim 8, wherein the objectives comprise a combination of a performance, a cost, a sustainability, or an equipment risk for an industrial plant.

11. The computer-implemented method of claim 8, wherein the output, via the graphical user interface, further comprises comparisons of each optimized maintenance schedule to the deployed maintenance schedule.

12. The computer-implemented method of claim 11, wherein the comparisons of each optimized maintenance schedule to the deployed maintenance schedule are based on depicting data values corresponding to at least three objectives for each maintenance schedule on a graph comprising at least three dimensions corresponding to the at least three objectives.

13. The computer-implemented method of claim 8, wherein the computer-implemented method further comprises assigning, by the hybrid artificial intelligence-driven decision support system, at least one weight that corresponds to at least one of the objectives, in response to a selection to deploy an optimized maintenance schedule other than an optimized maintenance schedule that is ranked as more optimal than the other optimized maintenance schedules, thereby changing subsequent rankings of at least some of the optimized maintenance schedules.

14. The computer-implemented method of claim 8, wherein the computer-implemented method further comprises responding to deployment of the optimized maintenance schedule by the hybrid artificial intelligence-driven decision support system occasionally predicting whether the deployed optimized maintenance schedule will meet the objectives.

15. A computer program product, comprising a non-transitory computer-readable medium having a computer-readable program code embodied therein to be executed by one or more processors, the program code including instructions to:
generate, by a hybrid artificial intelligence-driven decision support system using real-time sensor data, a maintenance schedule for assets based on objectives for an industrial plant;
predict, by the hybrid artificial intelligence-driven decision support system using real-time sensor data, that the maintenance schedule, which is deployed, will not meet at least one of the objectives;
generate, by the hybrid artificial intelligence-driven decision support system using real-time sensor data, optimized maintenance schedules for the assets, based on the objectives;
output, via a graphical user interface, the optimized maintenance schedules for the assets, with explanations how each optimized maintenance schedule would meet the objectives following deployment; and
enable, by the graphical user interface, a selection and deployment of any one of the optimized maintenance schedules for the assets, thereby changing a scheduled time when an asset maintenance action is performed.

16. The computer program product of claim 15, wherein the hybrid artificial intelligence-driven decision support system comprises at least one of a predictive maintenance model, a physics-based process simulation model, or a probabilistic risk model for the assets of the industrial plant.

17. The computer program product of claim 15, wherein the objectives comprise a combination of a performance, a cost, a sustainability, or an equipment risk for an industrial plant.

18. The computer program product of claim 15, wherein the output, via the graphical user interface, further comprises comparisons of each optimized maintenance schedule to the deployed maintenance schedule based on depicting data values corresponding to at least three objectives for each maintenance schedule on a graph comprising at least three dimensions corresponding to the at least three objectives.

19. The computer program product of claim 15, wherein the program code includes further instructions to assign, by the hybrid artificial intelligence-driven decision support system, at least one weight that corresponds to at least one of the objectives, in response to a selection to deploy an optimized maintenance schedule other than an optimized maintenance schedule that is ranked as more optimal than the other optimized maintenance schedules, thereby changing subsequent rankings of at least some of the optimized maintenance schedules.

20. The computer program product of claim 15, wherein the program code includes further instructions to respond to deployment of the optimized maintenance schedule by the hybrid artificial intelligence-driven decision support system occasionally predicting whether the deployed optimized maintenance schedule will meet the objectives.
